(19) **Europäisches Patentamt**
**European Patent Office**
**Office européen des brevets**

(11) **EP 4 696 501 A1**

(12) **EUROPEAN PATENT APPLICATION**
published in accordance with Art. 153(4) EPC

(43) Date of publication:
**18.02.2026 Bulletin 2026/08**

(21) Application number: **24807039.3**

(22) Date of filing: **30.04.2024**

(51) International Patent Classification (IPC):
**B32B 15/04** (2006.01)    **B29C 65/48** (2006.01)
**C23C 26/00** (2006.01)

(52) Cooperative Patent Classification (CPC):
**B29C 65/48; B32B 15/04; C23C 26/00**

(86) International application number:
**PCT/JP2024/016677**

(87) International publication number:
**WO 2024/237085 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023080411
14.02.2024 JP 2024020418**

(71) Applicant: **KABUSHIKI KAISHA KOBE SEIKO
SHO (KOBE STEEL, LTD.)
Hyogo 651-8585 (JP)**

(72) Inventors:
• **TAKAHASHI, Yusuke
Kobe-shi, Hyogo 651-2271 (JP)**
• **YAMAMOTO, Shintaro
Kobe-shi, Hyogo 651-2271 (JP)**
• **KATSUNO, Daiki
Kobe-shi, Hyogo 651-2271 (JP)**

(74) Representative: **Müller-Boré & Partner
Patentanwälte PartG mbB
Friedenheimer Brücke 21
80639 München (DE)**

(54) **SURFACE-TREATED METAL MATERIAL AND BONDED BODY**

(57)    To provide a surface-treated metal material used for adhesive joining and capable of further improving adhesive durability, and a joined body including the surface-treated metal material. A surface-treated metal material includes: a metal base material; and a silane film provided on at least a part of a surface of the metal base material, in which a surface of the silane film has an absorption peak in a wave number region of 1250 (cm$^{-1}$) or more and 1150 (cm$^{-1}$) or less in a case where parallel polarized light having an incident angle of 75° is incident and an absorption spectrum is measured by Fourier transform infrared spectroscopy, and the surface of the silane film has an aspect ratio of 0.5 or more in a case where a surface roughness is measured using a laser microscope in a measurement range of 1 mm × 1 mm at any three positions.

*FIG.1*

EP 4 696 501 A1

# EP 4 696 501 A1

**Description**

TECHNICAL FIELD

The present invention relates to a surface-treated metal material and a joined body including the surface-treated metal material.

BACKGROUND ART

In the field of transportation machines such as automobiles, ships, and aircrafts, from the viewpoint of weight reduction, adhesive joining is used as a joining technique between a steel material and a different material such as a lightweight material (an aluminum alloy, a titanium alloy, a carbon fiber, and the like). In addition, from the viewpoint of improving productivity and workability, the adhesive joining also has attracted attention as a welding alternative technique in response to on-site problems such as shortage of welding worker, technical preservation, and improvement in work environment.

On the other hand, the adhesive joining has a problem in strength reliability over a long-term use, and it is known that, as compared with the case of welding or bolt fastening, the strength is likely to decrease in a high-temperature and high-humidity environment or an environment in which a stress such as fatigue or creep acts in combination. In the adhesive joining, adhesion between an adhesive and a metal to be adhered is important, and when the adhesion between a surface of a metal material and the adhesive is insufficient, water enters an interface between a metal and a resin. As a result, erosion on the surface of the metal progresses, and peeling off occurs from the interface therebetween, so that an adhesive strength greatly decreases. Therefore, it is necessary to improve the adhesion between the metal and the adhesive resin to prevent water from entering the adhesion interface, and it is necessary to modify the surface of the metal material and adjust a surface state to a surface state suitable for adhesion such that the surface state of the metal does not easily change even when water enters.

In order to solve the above problems, various surface treatment techniques have been proposed. For example, Patent Literature 1 discloses an aqueous composition containing a tetraalkyl silicate or a monomeric or oligomeric hydrolysis product thereof and a hydrated oxide sol such as a silica sol. By treating a metal material such as an aluminum material, a steel material, or a titanium material with the aqueous composition, initial adhesion and long-term stability of the adhesion of a coating film such as an adhesive formed thereon can be improved.

CITATION LIST

PATENT LITERATURE

Patent Literature 1: JPH10-510307A

SUMMARY OF INVENTION

TECHNICAL PROBLEM

However, even in the case where the surface treatment technique described in Patent Literature 1 is used, an adhesive strength to a resin such as an adhesive is greatly reduced in a long-term wet deterioration test. Therefore, the required adhesive durability cannot be obtained.

The present invention has been made in view of such problems, and an object of the present invention is to provide a surface-treated metal material having an excellent adhesive strength to a resin such as an adhesive and capable of further improving adhesive durability to the resin, and a joined body including the surface-treated metal material.

SOLUTION TO PROBLEM

The above object of the present invention is achieved by the following configuration [1] related to a surface-treated metal material.

[1] A surface-treated metal material including:

a metal base material; and
a silane film provided on at least a part of a surface of the metal base material, in which
the surface-treated metal material has an absorption peak in a wave number region of 1250 $(cm^{-1})$ or more and

1150 (cm$^{-1}$) or less in a case where parallel polarized light having an incident angle of 75° is incident onto the surface of the silane film and an absorption spectrum is measured by Fourier transform infrared spectroscopy, and

the surface of the silane film has an aspect ratio of 0.5 or more in a case where a surface roughness is measured using a laser microscope in a measurement range of 1 mm $\times$ 1 mm at any three positions.

Preferred embodiments of the present invention related to the surface-treated metal material relate to the following [2] and [3].

[2] The surface-treated metal material according to [1], further including:

an adhesive resin layer on the surface of the silane film.

[3] The surface-treated metal material according to [1] or [2], in which an absorbance at the absorption peak is 0.003 or more.

The above object of the present invention is achieved by the following configurations [4] and 5 related to a joined body.

[4] A joined body including:

the surface-treated metal material according to any one of [1] to [3], in which
a first member and a second member are joined to each other via the adhesive resin layer,
either the first member or the second member is the surface-treated metal material, and
the silane film of the surface-treated metal material adheres to the adhesive resin layer.

[5] A joined body including:

the surface-treated metal material according to any one of [1] to [3], in which
a first member and a second member are joined to each other via the adhesive resin layer,
both the first member and the second member are the surface-treated metal materials including the metal base materials made of same or different metal materials, and
the silane film of the first member adheres to the silane film of the second member via the adhesive resin layer.

ADVANTAGEOUS EFFECTS OF INVENTION

According to the present invention, it is possible to provide a surface-treated metal material having an excellent adhesive strength to a resin such as an adhesive and capable of further improving adhesive durability to the resin, and a joined body including the surface-treated metal material.

BRIEF DESCRIPTION OF DRAWINGS

[Fig. 1] Fig. 1 is a graph showing an absorption spectrum in the case where a vertical axis represents an absorbance and a horizontal axis represents a wave number.
[Fig. 2A] Fig. 2A is a side view showing a shape of a joined body.
[Fig. 2B] Fig. 2B is a plan view showing the shape of the joined body.

DESCRIPTION OF EMBODIMENTS

The present inventors have conducted intensive studies on a metal material capable of improving an adhesive strength and adhesive durability to a resin even using a poorly adhesive metal material such as stainless steel or titanium. As a result, the present inventors have found that the above problems can be solved by appropriately controlling an absorption spectrum and a surface roughness of a surface of a silane film. Hereinafter, a surface-treated metal material according to an embodiment of the present invention will be described in detail.

[Surface-treated Metal Material]

In the surface-treated metal material according to the present embodiment, a silane film is formed on at least a part of a surface of a metal base material. Hereinafter, the metal base material and the silane film will be described in more detail.

<Metal Base Material>

The kind and the shape of the metal base material are not particularly limited as long as the metal base material is a member made of a metal. Examples of the kind of the metal include a steel sheet or plate, various plated steel sheets or plates, pure aluminum or an aluminum alloy, pure titanium or a titanium alloy, stainless steel, and copper or a copper alloy. In particular, as the aluminum alloy, for example, common alloys such as an Al-Mg-based alloy, an Al-Mg-Si-based alloy, an Al-Zn-Mg-based alloy, an Al-Si-based alloy, and an Al-Cu-based alloy can be used. In addition, as the titanium alloy, for example, common titanium alloys such as an $\alpha$ titanium alloy, a $\beta$ titanium alloy, or an $\alpha+\beta$ titanium alloy can be used. Further, as the stainless steel, common stainless steel such as austenitic stainless steel, ferritic stainless steel, martensitic stainless steel, and two-phase stainless steel can be used.

<Silane Film>

The silane film is provided on at least a part of the surface of the base material, and is specifically a surface-treated film containing an organic silane compound. Since the silane film containing a silane compound has an excellent bonding property to an adhesive and has excellent erosion resistance, the provision of the silane film makes it possible to maintain an excellent joining strength during adhesive joining to another member.

The silane film can be formed, for example, by coating the surface of the base material with an aqueous solution containing silicon oxide. Silicon oxide can be activated by being made into an aqueous solution and can self-polymerize through a sol-gel reaction. A natural oxide film is formed on the base material made of titanium or a titanium alloy. Therefore, when the oxide film on the surface of the base material is to be coated with the silicon oxide aqueous solution, the titanium oxide film reacts with the silicon oxide, and the silicon oxides are polymerized with each other. Therefore, a silane film having an excellent joining force to the base material can be formed in a desired region on the surface of the base material.

In addition, since the silane film has high mutual solubility with an organic compound such as an adhesive or a machine oil, for example, a processing oil or a press oil, the silane film also has an excellent bonding property to the adhesive. Further, since the silane film can alleviate the influence of a machine oil such as a processing oil or a press oil even in the case of adhering thereto, it is possible to prevent a decrease in adhesive durability due to oil application and to obtain excellent erosion resistance.

(Absorption Spectrum by Fourier Transform Infrared Spectroscopy)

When the silane film is formed on the surface of the metal base material, a silicon-oxygen bond is always formed in a region where the silane film is formed. In the present embodiment, as an index of whether the silane film is reliably formed, there is used a method in which parallel polarized light having an incident angle of 75° is incident onto a surface of the silane film, and an absorption spectrum is measured by Fourier transform infrared spectroscopy (FT-IR).

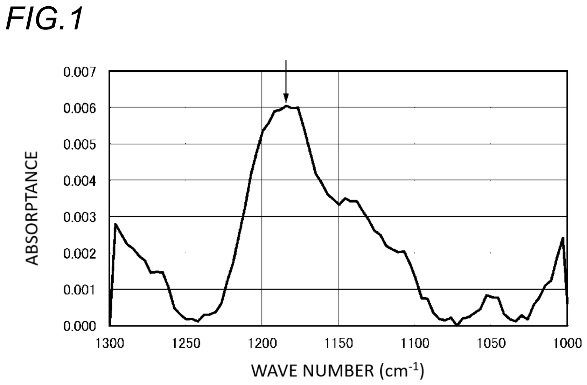

Fig. 1 is a graph showing an absorption spectrum in the case where a vertical axis represents an absorbance and a horizontal axis represents a wave number. The silicon-oxygen bond has an absorption peak indicated by an arrow in Fig. 1 in a wave number region of 1250 ($cm^{-1}$) or more and 1150 ($cm^{-1}$) or less. Therefore, the presence or absence of the formation of the silane film can be determined by observing the presence or absence of the absorption peak in the above wave number region.

Note that, when the absorbance at the absorption peak is 0.003 or more, the presence or absence of the silane film can be more reliably determined. Therefore, in the case where the absorption peak is present in the wave number region of 1250 ($cm^{-1}$) or more and 1150 ($cm^{-1}$) or less, the absorbance at the peak is preferably 0.003 or more.

(Surface Roughness)

When a surface shape of the metal base material is evenly (uniformly) roughened, a metal treatment solution is uniformly held on the surface of the metal base material during a surface treatment for forming the silane film, and as a result, the silane film is formed with a uniform film amount, and a silane film having an excellent performance can be obtained. When the surface shape of the metal base material has a deviation, the metal treatment solution stays in some places, for example, deep grooves, and the silane film is thick only in the grooves, so that a silane film having a good performance cannot be obtained. In addition, when the silane film is formed with a uniform thickness, once a stress is applied to an adhesive joined portion, the stress applied to an interface can be uniformly dispersed. By reducing a force applied per unit area in this way, the joining strength can be consequently stabilized. Note that, since the thickness of the silane film of the surface-treated metal material according to the present embodiment is several nm, the surface shape of the metal base material similarly appears on the surface of the surface-treated metal material. Therefore, in the present embodiment, it is defined by a surface roughness of the surface of the surface-treated metal material.

The surface roughness of the surface-treated metal material can be defined using the surface roughness specified in ISO 25178. In the present embodiment, the presence or absence of the formation of the silane film having an excellent performance is determined by Str (aspect ratio of surface properties) in the case where the surface roughness is measured using a laser microscope in a measurement range of 1 mm × 1 mm at any three positions on the surface of the silane film. The Str takes a value of 0 to 1, and a value close to 0 indicates that there is a streak or the like and the surface shape is non-uniformly rough. On the other hand, a value of the Str close to 1 shows that the surface shape does not depend on a direction and indicates an even roughness, and thus in the present embodiment, the Str is preferably close to 1.

When the aspect ratio is less than 0.5, a deviation of the surface shape of the metal base material increases, and a silane film having a uniform thickness cannot be formed, so that a silane film having an excellent performance cannot be obtained. Therefore, the aspect ratio obtained by the above measurement method is 0.5 or more, preferably 0.7 or more, and more preferably 0.8 or more.

Examples of a method of evenly roughening the surface of the surface-treated metal material include a method of performing a blast treatment on the metal base material. Specifically, the aspect ratio Str can be adjusted by selecting the kind of a projection material.

In the surface-treated metal material according to the present embodiment configured as described above, the silane film is provided on at least a part of the surface of the metal base material, and the absorption spectrum and the aspect ratio of the surface of the silane film are defined. Therefore, a silane film has excellent joinability to the metal base material and durability.

In addition, since the silane film has high mutual solubility with an organic compound such as an adhesive or a machine oil, for example, a processing oil or a press oil, the silane film also has an excellent bonding property to the adhesive. Further, since the silane film can alleviate the influence of a machine oil such as a processing oil or a press oil even in the case of adhering thereto, it is possible to prevent a decrease in adhesive durability due to oil application and to obtain excellent erosion resistance. Therefore, when the surface-treated metal material obtained by a production method according to the present embodiment is adhesively joined to another member, an excellent joining strength can be maintained over a long period of time.

<Adhesive Resin Layer>

The surface-treated metal material according to the present embodiment may further include an adhesive resin layer on the surface of the silane film. As described above, by including the adhesive resin layer on the surface of the silane film having excellent joinability to the adhesive and durability, it is possible to simplify a step of adhesively joining the surface-treated metal material according to the present embodiment and the same surface-treated metal material or other members.

A method of forming the adhesive resin layer on at least a part of the surface of the silane film is not particularly limited, and for example, an adhesive sheet prepared from an adhesive resin material in advance may be attached to the surface of the silane film, or a method of spraying or applying the adhesive resin material to the surface of the silane film may be used.

In the present invention, a resin constituting the adhesive resin layer is not particularly limited, and an adhesive resin that has been used in the related art for joining a titanium or titanium alloy material, such as an epoxy-based resin, a urethane-based resin, a nitrile-based resin, a nylon-based resin, or an acrylic resin, can be used. A thickness of the adhesive resin layer is not particularly limited, and is preferably 10 $\mu$m to 500 $\mu$m, and more preferably 50 $\mu$m to 400 $\mu$m from the viewpoint of improving the adhesive strength.

[Method For Producing Surface-treated Metal Material]

The surface-treated metal material according to the present embodiment can be produced, for example, as follows.

<Blast Treatment Step>

First, at least a part (region) of the surface of the metal base material is subjected to a blast treatment. Specifically, abrasive grains for blasting or a solution containing abrasive grains is projected onto the region at a high speed using compressed air, a motor, or the like. Accordingly, contaminants, deposits, and oxide films present on the surface of the metal base material are removed and cleaned, and an uneven shape is formed in the surface region of the metal base material, so that the aspect ratio can be adjusted.

(kind of Blast Treatment)

The kind of the blast treatment in the blast treatment step is not particularly limited, and a dry blast method or a wet blast treatment method may be used, and the same effect can be obtained by using either treatment method. For example, a dry blast method is preferably used from an economical viewpoint since a facility is small and versatile. In addition, a wet blast method is preferably used from the viewpoint of measures against dust and treatment stability since the heat input to the surface of a metal base material 1 is small and the remaining of the abrasive grains can be prevented. In addition, the kind of the abrasive grains is not particularly limited, and commercially available abrasive grains can be used.

<Coating Step>

Next, the region on the surface of the metal base material subjected to the blast treatment is coated with a metal treatment solution containing a silane compound. In the coating step, it is sufficient that a main component mainly containing a silane compound is used for coating so as to be present in an appropriate amount on the surface of the metal base material, and examples of the method include spraying, showering, roll coating, coating with a brush, and an immersion treatment. Specific examples of the metal treatment solution will be described later.

<Drying Step>

Thereafter, a solvent is evaporated from the metal treatment solution with which the surface of the metal base material has been coated, and the metal base material is dried to promote a reaction between the silane compound and the oxide film and polymerization between the silane compounds. Accordingly, the silane film is formed on at least a part of the surface of the metal base material, and the surface-treated metal material can be produced. A drying temperature is not particularly limited, and is preferably, for example, about 50°C to 100°C since a balance between productivity and energy consumption is improved. Note that, in order to improve soundness of the silane film and maximize an adhesive effect between the base material and the silane film, the step of coating the surface of the base material with the metal treatment solution and the step of drying the surface of the base material may be repeated 2 to 3 times.

<Adhesive Resin Layer Forming Step>

The surface-treated metal material according to the present embodiment preferably further include an adhesive resin layer on the surface. Specifically, after the drying step, the adhesive resin layer is formed on the surface of the silane film. As described above, by forming the adhesive resin layer on the surface of the silane film having excellent joinability to the adhesive and durability, it is possible to simplify a step of adhesively joining the surface-treated metal material and the same surface-treated metal material or other members.

The method of forming the adhesive resin layer is not particularly limited, and for example, an adhesive sheet prepared from an adhesive resin material in advance may be attached to the surface of the silane film, or a method of spraying or applying the adhesive resin material to the surface of the silane film may be used.

In the present invention, a resin constituting the adhesive resin layer is not particularly limited, and an adhesive resin that has been used in the related art for joining a titanium or titanium alloy material, such as an epoxy-based resin, a urethane-based resin, a nitrile-based resin, a nylon-based resin, or an acrylic resin, can be used. A thickness of the adhesive resin layer is not particularly limited, and is preferably 10 $\mu$m to 500 $\mu$m, and more preferably 50 $\mu$m to 400 $\mu$m from the viewpoint of improving the adhesive strength.

Hereinafter, the metal treatment solution for forming the silane film will be described with reference to specific examples.

(Metal Treatment Solution)

The metal treatment solution only needs to be a solution containing a silane compound, and for example, a solvent containing 50 mass% to 99.99 mass% of water and 0 mass% to 50 mass% of an organic solvent can be used. A mass of water with respect to a total mass of the solution is more preferably 50 mass% to 99.95 mass%. Note that, from the viewpoint of reducing an amount of a volatile organic compound (VOC) and reducing a risk of explosion, a main component of the solvent is preferably water. However, in order to reduce a surface tension of the metal treatment solution to improve water wettability and coatability and to increase a drying rate, for example, the following organic solvent may be contained.

In the case of using an organic solvent, various water-soluble solvents such as various alcohols and polyethers, for example, methanol, ethanol, propyl alcohol, butanol (including isomers), glycol-based solvents and ethers thereof can be used as the kind of the organic solvent.

The metal treatment solution preferably contains the silane compound in a content of 0.01 mass% or more and 1 mass% or less, and the silane compound preferably contains an alkyl silicate or an oligomer thereof and a hydrolysate of an organic silane compound or a polymer thereof. The concentration of the silane compound with respect to a total mass of the metal treatment solution is more preferably 0.05 mass% or more and 0.5 mass% or less. Note that, the concentration of the silane compound can be adjusted based on a coating amount of the metal treatment solution with which the surface of the metal base material is coated. As the silane compound contained in the metal treatment solution, specifically, 0.005 mass% or more and less than 1 mass% of an alkyl silicate or an oligomer thereof and 0.005 mass% or more and less than 1 mass% of a hydrolysate of an organic silane compound or a polymer thereof are preferably used.

When the specific metal treatment solution as described above is applied to at least a part of the surface of the metal base material, an alkyl silicate or an oligomer thereof is introduced into the surface of the base material, and a composite oxide film containing the metal constituting the metal base material and silicon is formed. Then, in the subsequent drying step, a silane film made of the organic silane compound in which the organic silane compound and the composite oxide film are chemically bonded to each other is formed. In this way, it is possible to obtain a surface-treated metal material which has an excellent bonding property to an adhesive, which has extremely excellent erosion resistance, which is less likely to decrease in adhesive strength even when exposed to a high-temperature and humid environment, and which has excellent adhesive durability. In addition, when the metal treatment solution is used, since a surface treatment using the alkyl silicate or an oligomer thereof and a surface treatment using the organic silane compound can be performed in one step, a surface-treated metal material having excellent adhesive durability can be produced in a simplified step, and a facility investment cost and a production cost can be reduced.

The metal treatment solution preferably has a pH of 2 or more and 7 or less. When the pH of the metal treatment solution is higher than 7, the alkyl silicate or an oligomer thereof tends to be excessively polymerized, and storage stability of the solution may decrease, which is not preferred. In addition, when the polymerization of the alkyl silicate or an oligomer thereof proceeds, the generated film is thick, and when a stress is applied, breakage occurs inside the silane film, and a high adhesive strength cannot be obtained. Therefore, the pH of the metal treatment solution is preferably 7 or less, and more preferably 6 or less from the viewpoint of the stability of the alkyl silicate.

On the other hand, when the pH of the metal treatment solution is lower than 2, the dissolution of the surface of the base material is severe, and the film is non-uniform, so that it is difficult to exhibit stable adhesiveness. Therefore, the pH of the metal treatment solution is preferably 2 or more, and more preferably 3 or more in consideration of reactivity with a metal oxide film. Note that, the pH of the metal treatment solution can be appropriately adjusted by adding, for example, an acid such as hydrochloric acid, sulfuric acid, nitric acid, or acetic acid.

A concentration of the alkyl silicate or an oligomer thereof in the metal treatment solution is preferably 0.005 mass% or more and less than 1 mass%. When the concentration of the alkyl silicate or an oligomer thereof in the metal treatment solution is 1 mass% or more, the generated film is thick, and the strength may decrease. Therefore, the concentration of the alkyl silicate or an oligomer thereof in the metal treatment solution is preferably less than 1 mass%, more preferably less than 0.5 mass%, and still more preferably less than 0.2 mass%.

On the other hand, when the concentration of the alkyl silicate or an oligomer thereof in the metal treatment solution is less than 0.005 mass%, the concentration of the alkyl silicate or an oligomer thereof is too low, so that the composite oxide film containing the metal constituting the metal base material and silicon cannot be sufficiently formed, and sufficient adhesive durability may not be obtained. Therefore, the concentration of the alkyl silicate or an oligomer thereof in the metal treatment solution is preferably 0.005 mass% or more, more preferably 0.01 mass% or more, and still more preferably 0.02 mass% or more.

A concentration of the organic silane compound in the metal treatment solution is preferably 0.005 mass% or more and less than 1 mass%. When the concentration of the organic silane compound in the metal treatment solution is 1 mass% or more, the generated film is thick, and the strength may decrease. In addition, the stability of the solution also decreases. Therefore, the concentration of the organic silane compound in the metal treatment solution is preferably less than 1 mass%, more preferably less than 0.5 mass%, and still more preferably less than 0.2 mass%.

On the other hand, when the concentration of the organic silane compound in the metal treatment solution is less than 0.005 mass%, the concentration of the organic silane compound is too low, so that a surface-treated film containing the organic silane compound cannot be sufficiently formed, and sufficient adhesive durability cannot be obtained. Therefore, the concentration of the organic silane compound in the metal treatment solution is preferably 0.005 mass% or more, more preferably 0.01 mass% or more, and still more preferably 0.02 mass% or more.

In the case where, contained as the silane compound in the metal treatment solution, a mass of the alkyl silicate or an oligomer thereof is X and a mass of the hydrolysate of the organic silane compound or a polymer thereof is Y, a ratio of X to Y is preferably 4:1 to 1:4. The ratio of X to Y is more preferably 2:1 to 1:2. In order to control the polymerization of these substances and stabilize the metal treatment solution, the metal treatment solution preferably contains an acid in an amount of 1 mass% or less with respect to a total mass of the silane compound.

In a silane film composed of the alkyl silicate or an oligomer thereof and the hydrolysate of the organic silane compound or a polymer thereof, a film amount is preferably adjusted to an optimum range in order to exhibit sufficient adhesive durability. When the film amount of the silane film is less than 0.1 mg/m$^2$, the metal surface cannot be sufficiently covered with the film, and it may be difficult to obtain desired adhesive durability. On the other hand, when the film amount of the silane film is more than 20 mg/m$^2$, the silane film is bulky, so that the adhesion of the silane film to the metal base material is insufficient, and breakage starting from the silane film may occur, which may make it difficult to obtain desired adhesive strength. Therefore, the film amount of the silane film is preferably 0.1 mg/m$^2$ or more and 20 mg/m$^2$ or less, and more preferably 0.5 mg/m$^2$ or more and 15 mg/m$^2$ or less. By designing the ratio of X to Y in the metal treatment solution to be within the above range to prepare the metal treatment solution, a preferred film amount of the silane film can be achieved.

The kind of the alkyl silicate or an oligomer thereof contained in the metal treatment solution is not particularly limited, and a silicate, a tetraalkoxy orthosilicate, or an oligomer thereof is preferred from the viewpoint of not generating a by-product that causes erosion of the film or deterioration of the adhesive resin after the reaction. Among them, tetraethyl orthosilicate (TEOS) or a polymer (oligomer) thereof is preferably used since it is neutral and no alkali remains after the silane film is formed. Note that, the polymer includes an oligomer and the like. Here, as the alkyl silicate or an oligomer thereof, only one kind may be used alone, or two or more kinds may be used in combination.

The kind of the organic silane compound contained in the metal treatment solution is not particularly limited, and the organic silane compound may include a silane compound having a plurality of hydrolyzable trialkoxyl groups in the molecule, a hydrolysate thereof, or a polymer thereof. The silane compound having a plurality of hydrolyzable trialkoxyl groups in the molecule not only forms a dense siloxane bond by self-polymerization, but also has high reactivity with a metal oxide and forms a chemically stable bond, so that the durability of the silane film can be further improved. In addition, the silane film has high mutual solubility with an organic compound such as an adhesive or a machine oil, for example, a processing oil or a press oil, and can alleviate the influence of a machine oil such as a processing oil or a press oil even when the film adheres thereto. Therefore, the silane film also plays a role of preventing a decrease in adhesive durability due to oil application. The kind of the silane compound is not particularly limited, and from the viewpoint of economy, a silane compound having two hydrolyzable trialkoxysilyl groups in the molecule (bissilane compound) is preferred, and for example, bistrialkoxysilylethane, bistrialkoxysilylbenzene, bistrialkoxysilylhexane, bistrialkoxysilylpropylamine, or bistrialkoxysilylpropyltetrasulfide can be used. In particular, from the viewpoint of versatility, economy, and stability of the aqueous solution, bistrialkoxysilylethane is preferably used, and bistriethoxysilylethane (BTSE) is more preferably used. Here, as the organic silane compound, only one kind may be used alone, or two or more kinds may be used in combination.

In addition, the organic silane compound may contain a silane coupling agent having a reactive functional group capable of chemical bonding to an organic resin component, a hydrolysate thereof, or a polymer thereof. For example, when a silane coupling agent having a reactive functional group such as an amino group, an epoxy group, a methacrylic group, a vinyl group, or a mercapto group is used alone or in combination with the silane compound, a chemical bond is formed between the film and the resin, and the adhesive durability can be further improved. Note that, the functional group in the silane coupling agent is not limited to those described above, and a silane coupling agent having various functional groups can be appropriately selected and used according to the adhesive resin to be used. Suitable specific examples of the silane coupling agent include 3-aminopropyltrimethoxysilane, 3-aminopropyltriethoxysilane, 3-(N-aminoethyl)-aminopropyltrimethoxysilane, 3-(N-aminoethyl)-aminopropyltriethoxysilane, 3-mercaptopropyltrimethoxysilane, 3-mercaptopropyltriethoxysilane, 3-glycidoxypropyltrimethoxysilane, 3-glycidoxypropyltriethoxysilane, 3-methacryloxypropyltrimethoxysilane, and 3-methacryloxypropyltriethoxysilane. Here, as the silane coupling agent, only one kind may be used alone, or two or more kinds may be used in combination.

In the present embodiment, when the metal treatment solution contains a particulate inorganic compound having a diameter of 10 nm or more (hereinafter, also simply referred to as a "particulate inorganic compound"), an additional step such as water washing for removing the silane film is required after the silane film is formed. In addition, the formed silane film is thick, and the adhesive strength and the adhesive durability may decrease. Therefore, the metal treatment solution preferably is substantially free of a particulate inorganic compound. Note that, "the metal treatment solution is substantially free of a particulate inorganic compound" is not limited to an aspect in which the solution does not contain the particulate inorganic compound at all, and the solution may contain the particulate inorganic compound at an impurity level. Specifically, the particulate inorganic compound is allowed to be contained up to 0.05 mass% or less with respect to the total amount of the metal treatment solution. Examples of the particulate inorganic compound include sols of inorganic oxides such as silica and alumina. Note that, the diameter of the particulate inorganic compound represents a diameter measured by observing a solid content after drying a treatment solution using a transmission electron microscope (TEM) or measuring a diluted treatment solution using a solution particle counter.

Note that, the metal treatment solution may further contain one or more of a stabilizer, an auxiliary agent, and the like, as necessary, in addition to the alkyl silicate or an oligomer thereof, and the organic silane compound. For example, the stabilizer may contain an organic compound such as a carboxylic acid having 1 to 4 carbon atoms, such as formic acid or acetic acid, or an alcohol having 1 to 4 carbon atoms, such as methanol or ethanol.

Note that, examples of a method for preparing the metal treatment solution include, but are not limited to, the following preparation method. First, an organic silane compound and a small amount of acetic acid as a catalyst are added to a mixed solution containing an alcohol, such as ethanol, and water to sufficiently hydrolyze the organic silane compound, thereby obtaining an organic silane compound aqueous solution. Next, an aqueous solution of an alkyl silicate or an oligomer thereof is prepared by the same method, the two solutions are mixed, and then the mixture is diluted with water so as to have a predetermined concentration, thereby preparing a metal treatment solution. In addition, since the alkyl silicate or an oligomer thereof is basic and easily polymerized, in the case of using a basic compound as the organic silane compound, it is preferable to prepare the solution after neutralizing the organic silane solution using acetic acid or the like in advance in order to avoid excessive polymerization of the alkyl silicate or an oligomer thereof when the solution is mixed.

[Joined Body]

A joined body according to the present embodiment includes the above surface-treated metal material. Specifically, in the joined body, a first member and a second member are joined to each other via an adhesive resin layer. Note that, it is sufficient that at least one of the first member and the second member is the above surface-treated metal material, and the silane film of the surface-treated metal material adheres to the adhesive resin layer.

The joined body according to the present embodiment configured as described above is less likely to decrease in adhesive strength even when exposed to a high-temperature and humid environment, and has excellent adhesive durability. As described above, either the first member or the second member may be the surface-treated metal material according to the present invention, or both may be the surface-treated metal material according to the present invention. In the case where only one (first member) of the members is the surface-treated metal material, examples of the other member (second member) include a metal material not subjected to a surface treatment and a resin molded body not subjected to a surface treatment. As the metal material not subjected to a surface treatment, various metal materials can be used in addition to a titanium or titanium alloy material, an aluminum or aluminum alloy material, a copper or copper alloy material, and a stainless steel material.

As the resin molded body, it is possible to use, for example, a fiber-reinforced plastic molded body formed of various fiber-reinforced plastics such as a glass fiber-reinforced plastic (GFRP), a carbon fiber-reinforced plastic (CFRP), a boron fiber-reinforced plastic (BFRP), an aramid fiber-reinforced plastic (AFRP, KFRP), a polyethylene fiber-reinforced plastic (DFRP), and a Zylon reinforced plastic (ZFRP). By using these fiber-reinforced plastic molded bodies, it is possible to reduce a weight of the joined body while maintaining a certain strength.

Note that, as the resin molded body, in addition to the above fiber-reinforced plastics, it is also possible to use non-fiber-reinforced engineering plastics such as a polypropylene (PP), an acryl-butadiene-styrene copolymer (ABS) resin, a polyurethane (PU), a polyethylene (PE), a polyvinyl chloride (PVC), nylon 6, nylon 6,6, a polystyrene (PS), a polyethylene terephthalate (PET), a polyamide (PA), a polyphenylene sulfide (PPS), a polybutylene terephthalate (PBT), and a polyphthalamide (PPA).

When both the first member and the second member are the surface-treated metal material according to the present invention, the kinds of the metal base materials may be the same as or different from each other, and various combinations of metal base materials can be used.

[Method for Producing Joined Body]

The joined body according to the present embodiment can be produced by a common method. For example, an adhesive resin layer may be formed by a common method in a region where the silane film is formed, and another member may be joined so as to be in contact with the adhesive resin layer. The method of forming the adhesive resin layer is not particularly limited, and as described above, an adhesive sheet produced from an adhesive resin material may be used, or a method of spraying or applying the adhesive resin material to the surface of the silane film may be used.

In the above embodiment, an example of the surface-treated metal material on which the adhesive resin layer for producing the joined body is formed has been described, but the present invention is not limited to the above example, and the surface-treated metal material may be a surface-treated metal in which a coating film made of a coating material is formed on at least a part of the silane film. In the surface-treated metal material in which a coating film is formed, since the adhesiveness between a stainless steel base material and the silane film is excellent and the joinability between the silane film and the coating material is also excellent, the effect of preventing peeling off of the coating material can be obtained.

Examples

Hereinafter, the present invention will be described in more detail with reference to Inventive Examples and Comparative Examples, but the present invention is not limited to these Examples, and modifications can be made within the scope that can conform to the gist of the present invention, and all of them are included in the technical scope of the present invention. The following various production conditions are examples, and the present embodiment is not limited to the following conditions.

[Production of Sample]

<Preparation of Base Material>

First, sheet or plate materials made of various metal materials were cut so as to have a length of 100 mm in a longitudinal direction and a width of 25 mm, and two metal base materials were prepared under test conditions. The kinds of the metal materials are shown below.

    Aluminum alloy (JIS A7075): 3.8 mm in thickness
    Aluminum alloy (JIS A5052): 2 mm in thickness
    Pure titanium (JIS Grade 1): 1.2 mm in thickness
    Stainless steel (JIS SUS304): 1 mm in thickness

<Blast Treatment>

Next, an evaluation range for the metal base material was set to 10 mm from an end portion in the longitudinal direction and 25 mm in a width direction, and base materials in Inventive Example Nos. 1 to 5 and Comparative Example Nos. 4, 9, and 10 were subjected to a dry or wet blast treatment in the evaluation range and then washed with water for 1 minute. The treatment conditions in the blast treatment were as follows. Note that, in Comparative Example Nos. 1 to 3 and Nos. 5 to 8 in which the blast treatment was not performed, only the washing with acetone was performed.

(Dry Blast Treatment Conditions)

    Dry blasting apparatus: shot blasting apparatus (NAB-3K) manufactured by NISSAN KIKO Co., Ltd.
    Grinding material: abrasive grain white random: WA #150, manufactured by Showa Denko K.K.
    Blast pressure: 0.7 (MPa)

(Wet Blast Treatment Conditions)

    Wet blasting apparatus: BABY Blast II (model: MBBII-25) manufactured by MACOHO Co., Ltd.
    Grinding material: abrasive grain white random: WA #150, WA #320, manufactured by Showa Denko K.K.
    Air pressure: 0.12 MPa
    Gun moving speed: 10 mm/sec

<Formation of Silane Film>

Thereafter, each of the base materials in Inventive Example Nos. 1 to 5 and Comparative Example Nos. 5 to 8 was immersed in a metal treatment solution containing a silicon compound 1 and a silicon compound 2 shown below at room temperature for 10 seconds, and then pulled up. Then, the resultant was dried at a temperature of 100°C for 60 seconds in a blow drying furnace to prepare a silane film, thereby obtaining a sample.

(Metal Treatment Solution)

    Silicon compound 1: 0.1 g bistriethoxysilylethane (BTSE)
    Silicon compound 2: 0.1 g of tetraethyl orthosilicate (TEOS)
    Ethanol: 2.0 g
    Acetic acid: 0.001 g
    Water: 97.8 g

[Measurement of Surface of Sample]

<Measurement of Str (Aspect Ratio)>

With respect to the surface of each sample (surface of the silane film), the surface roughness was measured in a measurement range of 1 mm × 1 mm at any three positions (position 1, position 2, and position 3) using a laser microscope (shape analysis laser microscope VK-X150/160, manufactured by KEYENCE Corporation). Note that, as measurement conditions, the magnification of the objective lens was set to 20 times to measure the aspect ratio, and the average value at three positions was calculated.

<Measurement of Absorption Spectrum by FT-IR>

The absorption spectrum of the surface of each sample (the surface of the silane film) was measured using FT-IR (Fourier transform infrared spectrophotometer: Magna-750 spectrometer manufactured by Nicolet). Specifically, parallel polarized light having an incident angle of 75° was incident, the absorption spectrum was measured, and the presence or absence of an absorption peak in a wave number region of 1250 ($cm^{-1}$) or more and 1150 ($cm^{-1}$) or less was measured. For those having a peak, the absorbance was measured. The production conditions of the samples and the measurement results of the aspect ratio and the absorbance are shown in Table 1 below.

[Production of Joining Test Body]

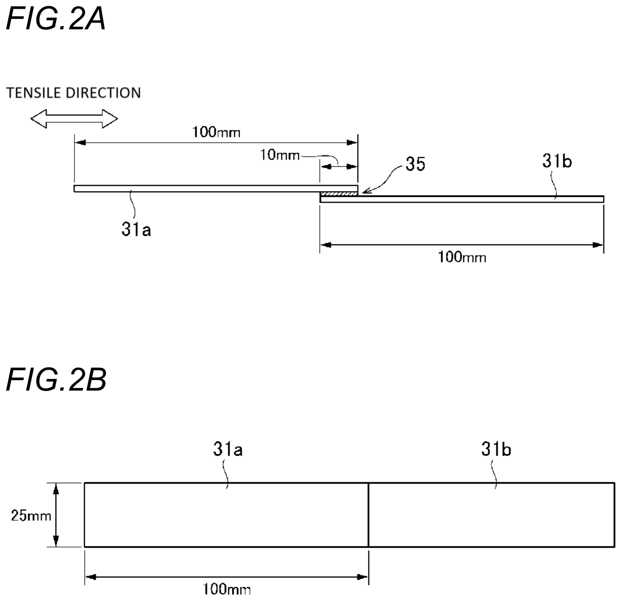

Thereafter, two samples were joined to each other via an adhesive to obtain a joining test body (joined body). Fig. 2A is a side view showing a shape of the joining test body, and Fig. 2B is a plan view thereof. As shown in Figs. 2A and 2B, an adhesive resin layer 35 was formed in an evaluation range on a surface of a sample 31b (second member), and a sample 31a (first member) having the same configuration as the sample 31b was disposed to overlap the adhesive resin layer 35. Note that, a lap length was set to 10 mm, and the sample 31a and the sample 31b were disposed to only overlap at a region of 10 mm from end portions.
In Inventive Example Nos. 1 to 5 and Comparative Example Nos. 5 to 8, since the silane film was formed in the above evaluation range, regions of 10 mm × 25 mm where the silane film was formed were disposed to face each other with the adhesive resin layer 35 interposed therebetween. Note that, as the material of the adhesive resin layer, a structural thermosetting epoxy resin-based adhesive was used. In addition, a small amount of glass beads (grain diameter: 250 μm) was added to the adhesive resin material to adjust the thickness of the adhesive resin layer 35 to 250 μm. After the samples were disposed to overlap as described above, the samples were dried at room temperature for 30 minutes and further heated at 180°C for 30 minutes to be thermally cured. Thereafter, the resultant was allowed to stand at room temperature for 24 hours to prepare a joining test body (joined body).
In Comparative Examples Nos. 1 to 3 and Nos. 5 to 8, each joining test body was prepared in the same manner as in the method described above by disposing the samples via the adhesive resin layer 35 such that surfaces washed with acetone faced each other. In Comparative Example Nos. 4, 9, and 10, each joining test body was prepared in the same manner as in the method described above by disposing the samples via the adhesive resin layer 35 such that surfaces subjected to a blast treatment faced each other.

[Evaluation of Joining Test Body]

<Deterioration Test>

A deterioration test was performed a part of the obtained joining test body in order to evaluate the adhesive durability. In the deterioration test, the joining test body was immersed in a 5% NaCl solution at 40°C for the period shown in Table 1 below.

<Tensile Test>

The obtained joining test body was subjected to a tensile test in order to evaluate the adhesiveness. As tensile conditions, both end portions of the joining test body were pulled in a tensile direction indicated by an arrow in Fig. 2A at a tensile speed of 50 mm/min to be broken. Thereafter, broken surfaces of the surface-treated metal material 31a (first member) and the surface-treated metal material 31b (second member) were observed, and an area of a region where interface peeling occurred between the surface-treated metal material 31a and the adhesive resin layer (interface peeling area of the first member) and an area of a contact surface between the surface-treated metal material 31a and the adhesive resin layer (adhesive area of the first member) were measured. Similarly, an area of a region where interface peeling occurred between the surface-treated metal material 31b and the adhesive resin layer (interface peeling area of the second member) and an area of a contact surface between the surface-treated metal material 31b and the adhesive resin layer (adhesive area of the second member) were measured. Then, a cohesive failure rate was calculated according to the following equation (2). The conditions in the deterioration test and the calculation results of the cohesive failure rate are shown in Table 1 below.

Cohesive failure rate (%) = 100 - {(interface peeling area of first member/adhesive area of first member) × 100 + (interface peeling area of second member/adhesive area of second member) × 100}    (2)

[Table 1]

Table 1

| No. | | Type of metal base material | Pretreatment | | Presence or absence of silane film | Str (aspect ratio) | | | | FT-IR | Adhesive durability evaluation | |
| --- | --- | --- | --- | --- | --- | --- | --- | --- | --- | --- | --- | --- |
| | | | Presence or absence and type of blast treatment | Grinding material | | Position 1 | Position 2 | Position 3 | Average | Absorbance at peak at 1250 $cm^{-1}$ to 1150 $cm^{-1}$ | Deterioration test condition | Cohesive failure rate |
| Inventive Example | 1 | Aluminum alloy (7075) | Dry blasting | WA #150 | Yes | 0.941 | 0.908 | 0.891 | 0.913 | 0.0092 | 5% NaCl, immersion for 21 days | 88% |
| | 2 | Aluminum alloy (7075) | Wet blasting | WA #150 | Yes | 0.864 | 0.956 | 0.961 | 0.927 | 0.006 | 5% NaCl, immersion for 21 days | 100% |
| | 3 | Aluminum alloy (A5052) | Wet blasting | WA #320 | Yes | 0.900 | 0.881 | 0.932 | 0.904 | 0.0097 | 5% NaCl, immersion for 20 days | 100% |
| | 4 | Pure titanium | Wet blasting | WA #320 | Yes | 0.835 | 0.894 | 0.888 | 0.872 | 0.0064 | No immersion | 100% |
| | 5 | Stainless steel (SUS304) | Wet blasting | WA #320 | Yes | 0.938 | 0.955 | 0.924 | 0.939 | 0.0126 | 5% NaCl, immersion for 20 days | 100% |

(continued)

| No. | | Type of metal base material | Pretreatment | | Presence or absence of silane film | Str (aspect ratio) | | | | FT-IR | Adhesive durability evaluation | |
|---|---|---|---|---|---|---|---|---|---|---|---|---|
| | | | Presence or absence and type of blast treatment | Grinding material | | Position 1 | Position 2 | Position 3 | Average | Absorbance at peak at 1250 cm⁻¹ to 1150 cm⁻¹ | Deterioration test condition | Cohesive failure rate |
| Comparative Example | 1 | Aluminum alloy (7075) | No | - | No | 0.082 | 0.024 | 0.067 | 0.058 | No peak | 5% NaCl, immersion for 21 days | 66% |
| | 2 | Aluminum alloy (A5052) | No | - | No | 0.046 | 0.131 | 0.075 | 0.084 | 0.0009 | 5% NaCl, immersion for 20 days | 13% |
| | 3 | Pure titanium | No | - | No | 0.900 | 0.720 | 0.835 | 0.819 | No peak | No immersion | 47% |
| | 4 | Stainless steel (SUS304) | Wet blasting | WA #320 | No | 0.938 | 0.955 | 0.924 | 0.939 | No peak | 5% NaCl, immersion for 20 days | 52% |
| | 5 | Aluminum alloy (7075) | No | - | Yes | 0.063 | 0.070 | 0.064 | 0.066 | 0.0069 | 5% NaCl, immersion for 21 days | 49% |
| | 6 | Aluminum alloy (A5052) | No | - | Yes | 0.017 | 0.018 | 0.022 | 0.019 | 0.0058 | 5% NaCl, immersion for 20 days | 17% |
| | 7 | Pure titanium | No | - | Yes | 0.046 | 0.057 | 0.035 | 0.046 | 0.0044 | No immersion | 71% |
| | 8 | Stainless steel (SUS304) | No | - | Yes | 0.003 | 0.003 | 0.008 | 0.004 | 0.0046 | 5% NaCl, immersion for 20 days | 0% |
| | 9 | Aluminum alloy (7075) | Wet blasting | WA #320 | No | 0.906 | 0.917 | 0.907 | 0.910 | No peak | 5% NaCl, immersion for 21 days | 60% |
| | 10 | Aluminum alloy (A5052) | Wet blasting | WA #320 | No | 0.922 | 0.915 | 0.895 | 0.911 | No peak | 5% NaCl, immersion for 20 days | 58% |

As shown in Table 1 above, since Inventive Example Nos. 1 to 5 are examples using a sample having a silane film on the surface, and the average value of the aspect ratio is within the range specified in the present invention and the absorption peak is present in a predetermined range, an excellent cohesive failure rate is exhibited regardless of the kind of the base material. In addition, since an excellent cohesive failure rate is exhibited even after immersion in the NaCl solution, it is shown that the adhesive durability is excellent.

On the other hand, in Comparative Example No. 1, since no silane film is formed, the average value of the aspect ratio is out of the range specified in the present invention, and no absorption peak is present in a predetermined range, the cohesive failure rate after the deterioration test is a low value.

In Comparative Example No. 2, since no silane film is formed and the average value of the aspect ratio is out of the range specified in the present invention, the cohesive failure rate after the deterioration test is a low value.

In Comparative Example No. 3, since no silane film is formed and no absorption peak is present in a predetermined range, the cohesive failure rate is a low value even when the immersion in the deterioration test is not performed.

In Comparative Example No. 4, since no silane film is formed and no absorption peak is present in a predetermined range, the cohesive failure rate after the deterioration test is a low value.

In Comparative Examples Nos. 5, 6, and 8, the silane film is formed and the absorption peak is present in a predetermined range, but since the average value of the aspect ratio is out of the range specified in the present invention, the cohesive failure rate after the deterioration test is a low value.

In Comparative Example No. 7, the silane film is formed and the absorption peak is present in a predetermined range, but since the average value of the aspect ratio is out of the range specified in the present invention, the cohesive failure rate is a low value even when the immersion in the deterioration test is not performed.

In Comparative Example Nos. 9 and 10, the average value of the aspect ratio is within the range specified in the present invention, but since no silane film is formed and no absorption peak is present in a predetermined range, the cohesive failure rate after the deterioration test is a low value.

Although various embodiments are described above, it is needless to say that the present invention is not limited to these embodiments. It is apparent that those skilled in the art can conceive of various modifications and alterations within the scope described in the claims, and it is understood that such modifications and alterations naturally fall within the technical scope of the present invention. In addition, the respective constituent elements in the above embodiment may be freely combined without departing from the gist of the invention.

Note that, the present application is based on a Japan Patent Application (Patent Application No. 2023-080411) filed on May 15, 2023 and a Japanese Patent Application (Patent Application No. 2024-020418) filed on February 14, 2024, contents of which are incorporated herein by reference.

REFERENCE SIGNS LIST

31a: surface-treated metal material (first member)
31b: surface-treated metal material (second member)
35: adhesive resin layer

**Claims**

1. A surface-treated metal material comprising:

   a metal base material; and
   a silane film provided on at least a part of a surface of the metal base material, wherein
   the surface-treated metal material has an absorption peak in a wave number region of 1250 (cm$^{-1}$) or more and 1150 (cm$^{-1}$) or less in a case where parallel polarized light having an incident angle of 75° is incident onto a surface of the silane film and an absorption spectrum is measured by Fourier transform infrared spectroscopy, and
   the surface of the silane film has an aspect ratio of 0.5 or more in a case where a surface roughness is measured using a laser microscope in a measurement range of 1 mm × 1 mm at any three positions.

2. The surface-treated metal material according to claim 1, further comprising:
   an adhesive resin layer on the surface of the silane film.

3. The surface-treated metal material according to claim 1, wherein an absorbance at the absorption peak is 0.003 or more.

4. A joined body comprising:

the surface-treated metal material according to any one of claims 1 to 3, wherein
a first member and a second member are joined to each other via the adhesive resin layer,
either the first member or the second member is the surface-treated metal material, and
the silane film of the surface-treated metal material adheres to the adhesive resin layer.

5. A joined body comprising:

the surface-treated metal material according to any one of claims 1 to 3, wherein
a first member and a second member are joined to each other via the adhesive resin layer,
both the first member and the second member are the surface-treated metal materials including the metal base
materials made of same or different metal materials, and
the silane film of the first member adheres to the silane film of the second member via the adhesive resin layer.

*FIG.1*

*FIG.2A*

TENSILE DIRECTION

100mm

10mm

35

31b

31a

100mm

*FIG.2B*

31a

31b

25mm

100mm

## INTERNATIONAL SEARCH REPORT

| International application No. |
|---|
| **PCT/JP2024/016677** |

| A. | CLASSIFICATION OF SUBJECT MATTER |
|---|---|

**B32B 15/04**(2006.01)i; **B29C 65/48**(2006.01)i; **C23C 26/00**(2006.01)i
FI:   B32B15/04 Z; B29C65/48; C23C26/00 A

According to International Patent Classification (IPC) or to both national classification and IPC

| B. | FIELDS SEARCHED |
|---|---|

Minimum documentation searched (classification system followed by classification symbols)

B32B1/00-43/00; C23C22/00-30/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2019-085610 A (KABUSHIKI KAISHA KOBE SEIKO SHO) 06 June 2019 (2019-06-06) claims, paragraphs [0017], [0033], [0075] | 1-5 |
| Y | JP 2016-211035 A (SHIKOKU CHEMICALS CORPORATION) 15 December 2016 (2016-12-15) claims, paragraphs [0057], [0059] | 1-5 |
| Y | JP 2016-108629 A (NIPPON STEEL & SUMITOMO METAL CORPORATION) 20 June 2016 (2016-06-20) claims, paragraphs [0027], [0030] | 1-5 |
| Y | JP 2013-083005 A (SHINGIJUTSU KENKYUSHO KK) 09 May 2013 (2013-05-09) claims, paragraph [0031] | 1-5 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/016677**

| Patent document cited in search report | | | Publication date (day/month/year) | Patent family member(s) | Publication date (day/month/year) |
|---|---|---|---|---|---|
| JP | 2019-085610 | A | 06 June 2019 | (Family: none) | |
| JP | 2016-211035 | A | 15 December 2016 | (Family: none) | |
| JP | 2016-108629 | A | 20 June 2016 | (Family: none) | |
| JP | 2013-083005 | A | 09 May 2013 | (Family: none) | |

Form PCT/ISA/210 (patent family annex) (July 2022)

**EP 4 696 501 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10510307 A
- JP 2023080411 A
- JP 2024020418 A